# EUROPEAN PATENT APPLICATION

(11) **EP 1 435 530 A1**
(43) Date of publication of application: **07.07.2004**
(21) Application number: 02468001.9
(22) Date of filing: 30.12.2002
(51) Int. Cl.: G02B 6/00

(54) **Decorative lighting plate**

(71) Applicant: Mathis, Max, 4280 Kranjska Gora (SI)
(72) Inventor: Mathis, Max, 4280 Kranjska Gora (SI)
(74) Representative: Pipan, Marjan

(57) **Abstract**

The object of the invention is the decorative illumination panel, designed for room illumination, especially for the rooms with lowered ceilings or for decorative aims, respectively, whereby in the boreholes (2), with dimensions between 0.5 and 3 mm, in glass or similar base panel (1) with or without the mirror surface, the ends of the optical fibres (3) are installed with the aim of illumination or room decoration, respectively.

## Description

The object of the invention is the decorative illumination panel, designed for additional illumination or room decoration, respectively, especially for the rooms with lowered ceilings or for decorative aims, respectively, whereby the ends of optical fibres are installed into the boreholes with dimensions between 0.5 to 3 mm, in glass or similar base with or without the mirror surface. The invention belongs to the class F 21 S 8/00 of the International Patent Classification.

The technical problem, which is successfully solved by the presented invention, is the realization of such decorative illumination panel, whereby it will be possible, in glass or similar base with or without the mirror surface, to carry out smaller boreholes (also up to 0.5 mm) and to use such panel for additional illumination of the rooms with simple replacement of the lowered ceiling element with the panel according to the invention or to use panel according to the invention as the decorative mirror surface with realized illuminated advertisings or graphical elements, respectively.

In the known cases of room illumination, especially the rooms with lowered ceilings, where it is possible to carry out the electrical installation above the construction which supports the panels of the lowered ceiling, separate insertion panels with installed neon lights are used. Although the neon lights use less electrical energy than the common lights with filament, such illumination is expensive, as well. As the neon lights have relatively limited lifespan, they often need to be replaced. Furthermore special nets or light dispersors need to be installed in front of the neon lights for achieving dispersed light current, what all makes the manufacture of such panel with neon lights more expensive.

There exists the solution, described in the document WO 02/079689 according to the PCT/US02/01987, describing the illumination system with large number of LED light elements, installed in the ceiling panel. The solution makes cheaper operation possible as in the case of the panel with neon lights, but is more complicated for manufacture, as every panel apart from numerous LED light elements must have its own electrical energy source, which because of the low voltage for operation of the LED light elements has to contain also the transformer of the electrical voltage, and all this makes the manufacture of such illumination panel more expensive. Furthermore such panel is heavier than common decorative panel and therefore it is also necessary to reinforce the supporting structure of the lowered ceiling adequately. However, all this, of course, contributes to the price rise of such kind of illumination.

Decorative illumination panel is according to the invention constructed in the way, that in the glass or similar base plate with the realized mirror surface or without it, numerous smaller openings with certain group of geometrical or known shapes or by random selection are manufactured, in which the ends of the optical fibres, installed to the source of illumination, are installed.

Decorative illumination panel according to the invention will be described in greater detail on the basis of the respective pictures, from which:

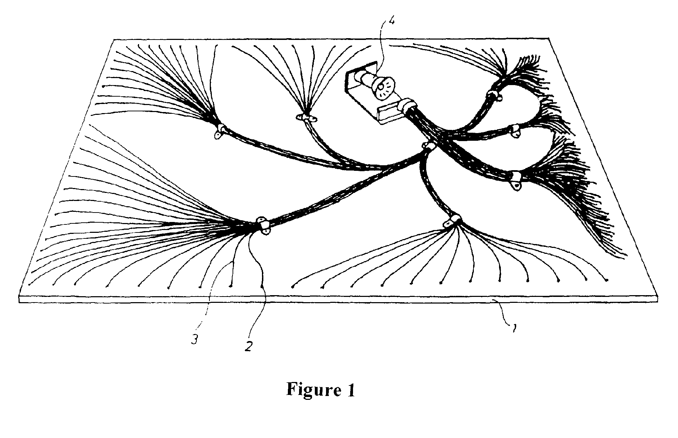

- **Fig. 1**: shows schematic presentation of the connection and installation of the optical fibres into glass or similar base;

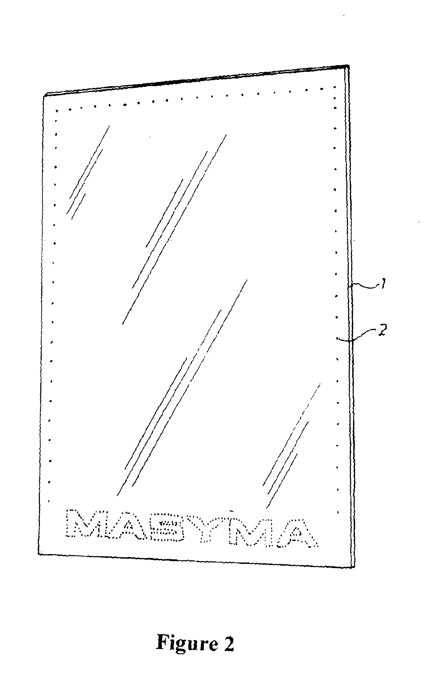

- **Fig. 2**: shows enbodiment case of installation of the decorative illumination panel according to the invention with the realized outer mirror surface in the room with lowered ceiling;

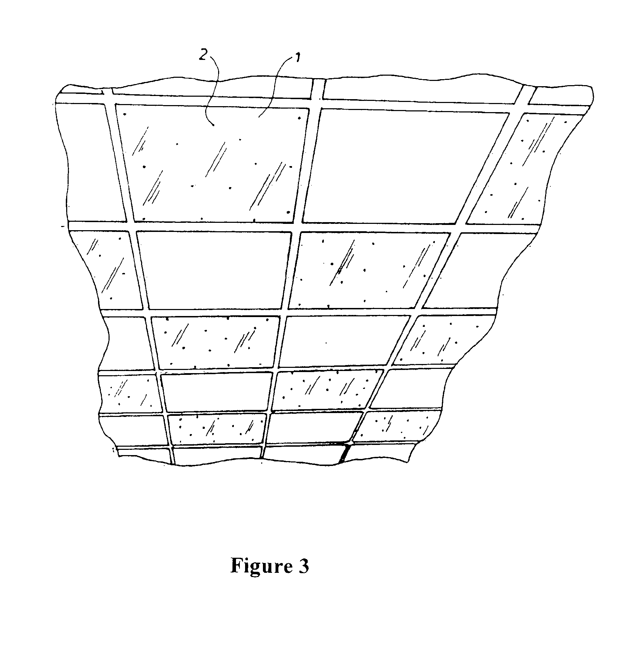

- **Fig. 3**: shows enbodiment case of decorative illumination panel as the mirror surface with intended decorative print.

Decorative illumination panel is according to the invention represented by the glass or similar base panel 1, which can have the realized outer mirror surface, wherein the boreholes 2 are realized, with the size from 0.5 to 3 mm. Boreholes 2 can be realized randomly or special geometrical patterns, margins, advertisings or other signs can be made thereof. Optical fibres 3 are installed along the inner surface of the decorative illumination panel according to the invention in the way, that they unite in larger or smaller groups, according to the realized boreholes 2, whereby the end of each optical fibre is installed and adequately fixed in individual borehole 2. The beginnings of all optical fibres 3, which are installed in front of the source of illumination 4, can be united in one or more groups.

Picture 2 shows the enbodiment case of installation of the decorative illumination panel according to the invention with the realized outer mirror surface in the room with lowered ceiling. Individual decorative illumination panels according to the invention are dimensionally the same as the panels of the lowered ceiling and are installed in various ways with regard to the purpose and the size of the room. Each decorative illumination panel is realized as an independent additional illumination unit and can be replaced or optionally moved in a simple way.

Picture 3 shows enbodiment case of decorative illumination panel as the mirror surface with intended decorative print. The print is shaped by the means of boreholes 2, in which the ends of the optical fibres 3 are installed, and according to the presented can illuminate a definite advertising, a decorative print or a graphical pattern.

## Claims

1. Decorative illumination panel,
**characterized in that**
in the glass or similar base plate (1) with the realized mirror surface or without it, numerous smaller openings (2) with certain group of geometrical or known shapes or by random selection are manufactured, in which the ends of the optical fibres (3), installed to the source of illumination (4), are installed.

2. Decorative illumination panel, according to the claim 1,
**characterized in that**
the size of the smaller openings (2) is between 0.5 and 3 mm.

3. Decorative illumination panel, according to the claims 1 and 2,
**characterized in that**
it is dimensionally the same as the panels of the lowered ceiling and is installed in variously with regard to the purpose and the size of the room, and is realized as an independent additional illumination unit, that can be replaced or optionally moved in a simple way.

4. Decorative illumination panel, according to the claims 1 and 2,
**characterized in that**
it is shaped as the decorative panel with the mirror surface with illuminated intended decorative print, advertisings or graphical elements.
